Europäisches Patentamt

European Patent Office

Office européen des brevets

(11) Publication number: **0 100 035**
**· B1**

(12) EUROPEAN PATENT SPECIFICATION

(45) Date of publication of patent specification: **25.01.89**

(51) Int. Cl.⁴: **B 23 K 9/32**

(21) Application number: **83106944.8**

(22) Date of filing: **15.07.83**

(54) Arc welding torch with integral vision sensor.

(30) Priority: **26.07.82 US 401471**

(43) Date of publication of application:
**08.02.84 Bulletin 84/06**

(45) Publication of the grant of the patent:
**25.01.89 Bulletin 89/04**

(84) Designated Contracting States:
**CH DE FR GB IT LI SE**

(56) References cited:
**EP-A-0 037 521**
**EP-A-0 064 603**
**EP-A-0 094 074**
**FR-A-2 412 380**
**US-A-3 940 586**

(73) Proprietor: **GENERAL ELECTRIC COMPANY**
**1 River Road**
**Schenectady New York 12305 (US)**

(72) Inventor: **Case, Allen Whitmore, Jr.**
**RD No. 3 Krutz Street**
**Amsterdam New York 12010 (US)**
Inventor: **Kuchar, Norman Russell**
**3A Sherwood Lane**
**Burnt Hills New York 12027 (US)**
Inventor: **Peroutky, Donald Clement**
**2243 Rosendale Road**
**Schenectady New York 12309 (US)**

(74) Representative: **Catherine, Alain**
**General Electric France Service de Propriété**
**Industrielle 18 Rue Horace Vernet B.P. 76**
**F-92134 Issy-les-Moulineaux Cedex (FR)**

Courier Press, Leamington Spa, England.

## Description

This invention relates to electric arc welding and especially to an arc welding torch with a built-in optical system which permits real time observation of the weld puddle.

Good arc welds are achieved by controlling weld current, weld penetration, centering of the weld puddle over part seam, weld beam lay rates, etc. When welding manually, the operator observes the welding process from an oblique angle and attempts to manipulate the weld torch and power supply adjustments to obtain good welds on the basis of intuition and prior experience. With machine welding, weld parameters are averaged based on past experience, and the machine programmed to weld with these inputs. Often this open loop machine welding does not produce good welds. For consistently good machine welding, some means for sensing weld puddle characteristics and using this information as feedback to control the welding process is needed.

Some experiments have been conducted at the Ohio State University Center for Welding Research in which the weld puddle has been viewed by an overhead optical system looking down over the welding electrode. In these experiments, the welding torch, open optical system, and video camera were carried on a large platform unsuitable for any practical welding application. The welding torch itself is conventional except that the lower part and electrode are bent through 90° and provided with a window. See CWR Technical Report 529613-81-3, S. H. Rao, September 1981, pages 27—33.

EP—A—94074 a prior art document falling within the terms of Part 54.3 EPC describes a welding apparatus with monitor means comprising a welding torch including an electric conductor cover at it's outer periphery with an insulating cap, an electrode supported on said electric conductor and projecting outwardly through an opening formed in said insulating cap, and a gas passageway defined in said electric conductor for ejecting gas through openings formed in said electric conductor, characterized by further comprising fiberscopes assembled with said electric conductor and located in a position in which forward ends of the fiberscopes can command a view of outside through said gas ejecting ports.

EP—A—64 603 a further prior art document following within the terms of Part 54.3 EPC describes a welding torch command which uses a light window as sensor for automatic torch control without contact of the center of the joint whereby the light intensity distribution of the light plasma window produced by the welding over the welding joint is used as the control/regulation quantity for the movement of the welding torch.

Reference is also made to the related application EP—A—0100034 of the same effective filing date.

The present invention provides a concentric electric arc welding torch with a built-in optical vision sensor for real time observation of a weld puddle and weld region comprising:

—a housing to which is attached a gas nozzle;

—a metal torch body in said housing having a cover gas connection and internal passages for gas flow into said housing and nozzle, internal passages for coolant flow and incoming and exit coolant connections, one of which conducts electrical power to said torch body, and an integral electrode holder in the form of a multipart projecting arm for holding an electrode in said gas nozzle, said torch having an integral optical vision system whose axis is approximately aligned with said electrode and which is comprised of a lens housing and a lens system mounted directly over said electrode and projecting arm, the cross section of said holder perpendicular to the optical axis being relatively small and the region between said optical vision system and gas nozzle enclosed presenting minimum obstruction to passage of light; said lens system providing a demagnified image of the weld puddle and weld region with said holder out of focus; and means on said torch for transferring said demagnified image to a remote welding controller.

Fig. 1 shows seam welding with a gas tunsten arc welding (GTAW) torch which has a vision attachment and remote viewing system;

Figs. 2 and 3 are a vertical cross section and side view of the GTAW torch and integral optical system;

Fig. 4 is a view of the weld puddle and weld area through a window in the torch;

Figs. 5 and 6 are side and top views of the copper torch body with integral electrode holder;

Fig. 7 is an axial cross section through a concentric arc welding torch and integral optical system;

Figs. 8 and 9 are horizontal cross sections of the torch body taken approximately on lines 8—8 and 9—9 of Fig. 7;

Fig. 10 is a partial side view and cross section of the torch body and window in Fig. 7; and

Figs. 11 and 12 are a vertical cross section and side view of a third embodiment which has a folded vision attachment.

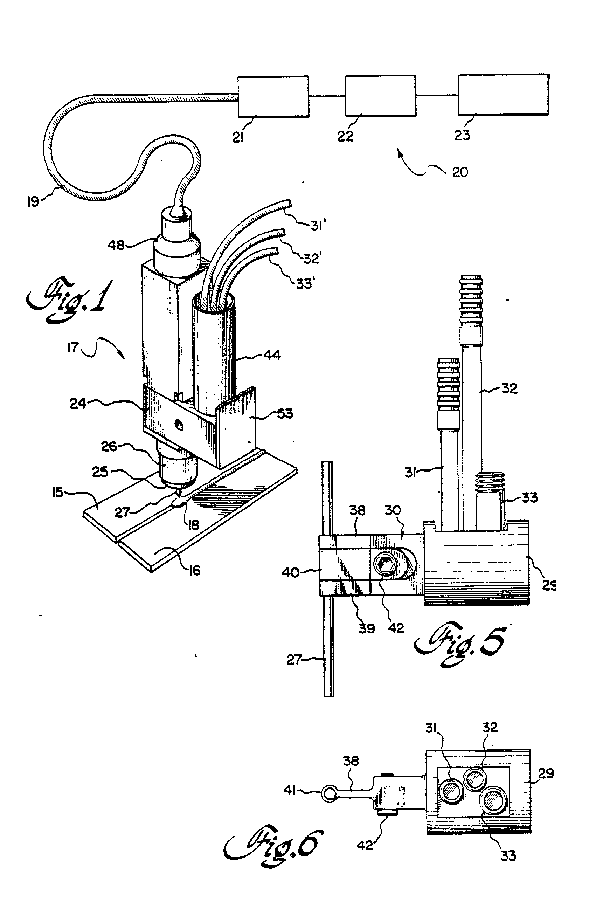

In Fig. 1, seam welding of workpieces 15 and 16 is illustrated using an electric arc welding torch 17 that has a built-in optical system. The weld puddle 18 and adjacent weld region are imaged on the face of a fiber optical cable 19 and the image is transferred to a remotely located system 20. One of these is that the image is magnified by a lens system 21 and projected onto a video camera 22 such as General Electric's TN 2500 Charge Injection Device Camera, and the output is sent to a television monitor 23 where the image may be viewed. Alternatively, the video output is fed to a controller and used in a feedback arrangement to control movement of the torch and the welding process to achieve consistently good quality welds.

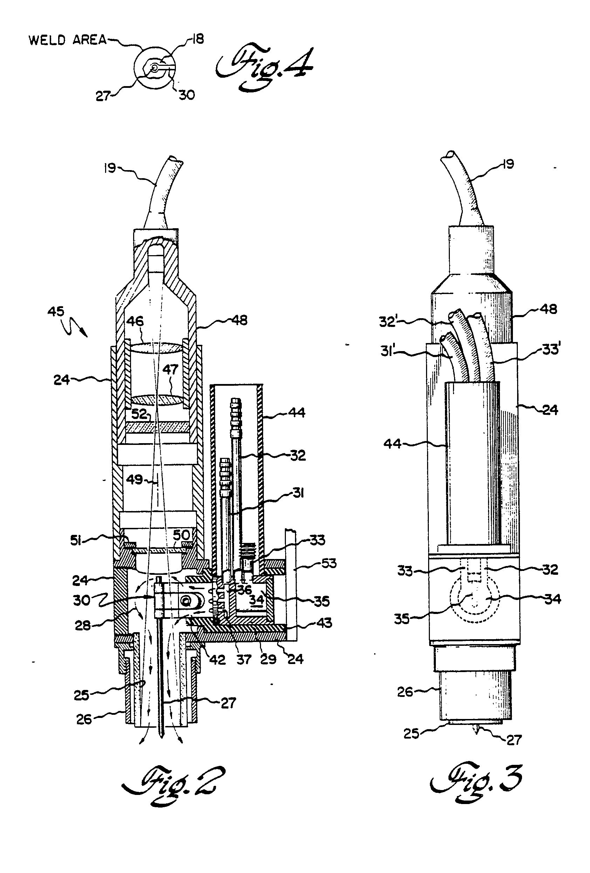

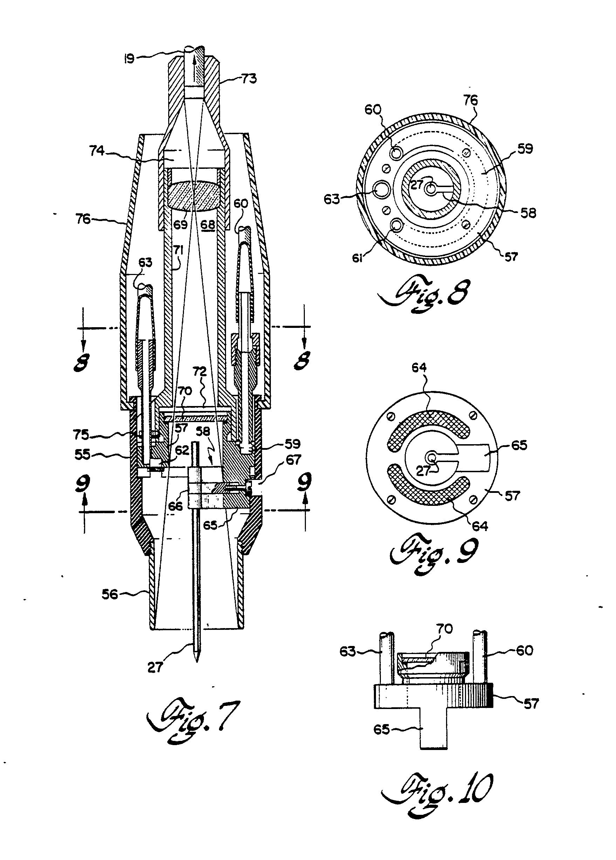

One embodiment of the gas tungsten arc welding (GTAW) torch with an integral optical system is shown in Figs. 2—6. This torch is a configuration which can be used for welding in almost all applications in which a conventional gas tungsten welding torch is used. The torch has a water cooled copper torch body with an integral slim profile electrode holder and with means for providing cover gas flow to the weld region. An optical lens is located directly over the electrode to image the weld region on the face of the fiber optic cable. The torch and optical components are supported in a compact enclosure.

At the lower end of metal housing 24, Fig. 2, is a cylindrical ceramic gas cup or nozzle 25 which is surrounded by a metal annular gas cup 26. The replaceable tungsten electrode 27 is at the center of gas cup 25, approximately on the optical centerline. Cover gas flow is indicated by arrows 28; the electrode, the weld puddle, the arc, and adjacent heated areas of the workpieces are protected from atmospheric contamination by the gaseous shield. The cover gas is usually an inert gas such as argon or a mixture of gases.

The copper torch body 29 has an integral electrode holder 30 and gas, water, and electrical power connections 31—33. For a compact configuration, the torch body 29 and holder 30 position the electrode 27 on the optical centerline, and the gas, water, and electrical connections 31—33 emerge close to and parallel with the optical system. Unlike conventional electrode collets which occupy a large region around the electrode, the electrode holder 30 of this torch provides for a minimum cross section perpendicular to the optical axis consistent with holding the electrode securely and providing adequate conduction area for, say, a 200 ampere electrode current flow. Looking also at Figs. 3, 5 and 6, the round torch body 29 has an interior water chamber 34 with a central baffle 35 to provide maximum contact of water with the torch body and optimum cooling of the assembly. Incoming water or other coolant passing through the threaded tube 32 into chamber 34 must pass under the baffle 35 in order to exit through the tube 33. The latter has a dual function as the electrical power connection; typically the hose coupled to the fitting, through which water flows, has a metal braid jacket which conducts the power. Cover gas flows from the threaded copper pipe 31 into a separate passage 36 (Fig. 2) and out through orifices 37 in the interior of the welding torch. Cover gas flow emerges from the torch body 29 on both sides of the electrode holder 30 to impart minimum turbulence to gas flow down through the gas cup 25. Laminar flow is preferred to achieve good shielding.

The slim profile copper electrode holder 30, which is a projecting arm or chuck, has three parts. Stationary arms 38 and 39 of the holder are integral with the torch body 29, and the center arm 40 is movable. All three parts have a ring 41 at the end of the arm into which the tungsten rod electrode 27 is inserted. Movable arm 40 is used to force the electrode tightly against stationary arms 38 and 39 by the action of a clamp screw 42 when it is tightened. This clamp screw 42 is accessible through a hole in the side of the torch support framework housing 24, to permit easy changing of electrodes. An insulating sleeve 43 (Fig. 2) electrically insulates the torch body 29 from the metal housing 24, and provides sufficient flashover distance to prevent arcing from the torch body to the metallic framework during high voltage weld arc starting. An open-ended insulating tube 44 encloses the gas, water, and power connections.

The torch's integral optical system is indicated at 45. The compound lens system 46, 47 that is shown (25 mm focal length, f 1:1.4) is a good compromise between physical size, aperture opening, and depth of field for weld puddle viewing. It is enclosed in a cell housing 48 which can be moved axially to focus on the weld spot for a reasonable (one-half inch −1.27 cm) range of electrode extension beyond the gas cup 25. The optical axis 49 is approximately aligned with the center of gas cup 25 and with tungsten electrode 27. The optical path penetrates a quartz window 50 which seals the optics from the cover gas. This transparent, heat reflecting window is retained in the housing 24 by a ring 51. A filter region accommodates one or more optical filters 52 which are either infrared radiation blocking filters or neutral density filters. Preferably, a small visible range of light is transmitted to the video camera. The lens housing 48 contains a cylindrical cavity which holds the end face of fiber optic cable 19 on the lens optical axis 49 and at a spacing to give the desired image demagnification.

Fig. 4 is a view of the weld area through quartz window 50. The weld puddle 18, tungsten electrode 27, and slim profile electrode holder 30 would be seen if one looked down through this window. However, the electrode 30 is located sufficiently far from the optical focus region at the weld puddle to provide minimum optical distortion of the puddle image on the face of the optical cable 19. That is, in the image of the weld puddle and weld area, the electrode 27 is seen, but the electrode holder 30 is out of focus and is not evident in the image or is barely visible.

Referring to Fig. 1, the gas supply line 31', water line 32', and water/power cable 33' plus the fiber optic cable 19, are made to exit away from the weld area. A mounting bracket 53 attached to the metal housing 24 permits mounting the welding torch 17 to any available mounting configuration, such as the wrist or arm of a robotic machine. A commercially available coherent fiber optic cable 19 is used; the image picked up at one end of the cable is transmitted faithfully to the other end. One GTAW torch 17 with a vision attachment that was built had an overall length of about 7.25 inches (18.4 cm).

A concentric gas tungsten arc welding torch with an integral optical system is illustrated in Figs. 7—10. The torch-vision system of this second embodiment is similar in function to the torch in Figs. 1—6 but incorporates a more compact configuration, is lighter in weight, has a wider field of view at the weld region, and provides for a lens effect in the cover gas flow for more effective gas shielding. When the fiber optic cable of this torch is coupled to a video recording or viewing system, real time observation of the weld puddle can be made and utilized to control the weld process. An insulating housing 55 has an attached metal gas cup and nozzle 56, and supports a ring-shaped torch body 57 with an integral, slim profile electrode holder 58. The upper half of copper ring 57 contains a water flow channel 59. Water enters one end of the channel 59 through a tube 60 and exits the other end through another tube 61. The first of these has a metal braid jacket to conduct electrical power to the torch in addition to cooling water.

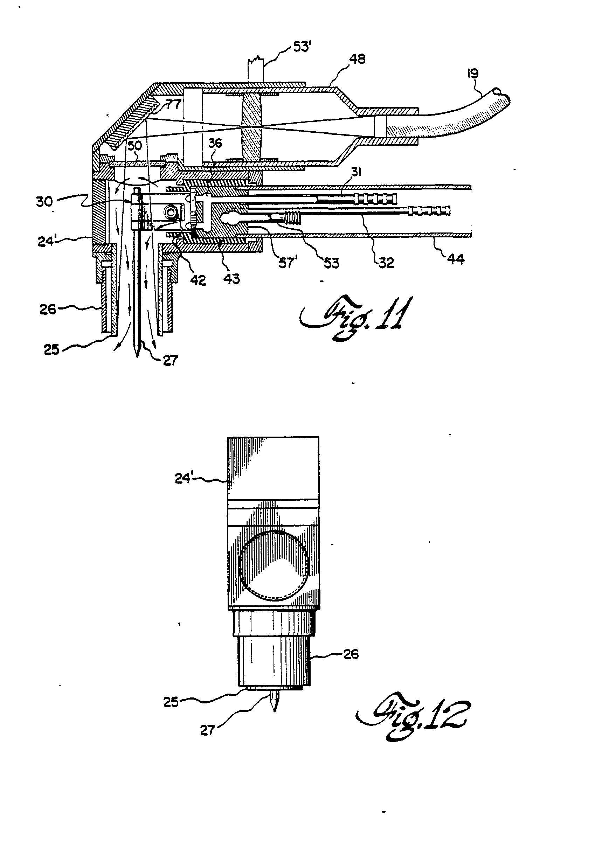

The lower half of copper ring 57 contains a gas flow channel 62. Welding cover gas enters the channel through a tube 63, and gas exits through the gas lens 64 and through the torch gas cup 56 to cover the weld region. The gas lens consists of a permeable barrier of multiple fine mesh metal cloth screens which provide a laminar, stable stream of shielding cover gas. By reducing turbulence and focusing the gas into a coherent stream, the covering ability of the shield gas is effective at greater gas cup to workpiece distances than is possible without the lens. One gas lens 64 has eight layers, alternating 100 mesh (150 micrometers) wire cloth and 250 mesh (63 micrometers) wire cloth. The tungsten electrode 27 is secured to the torch body 57 with a slim profile, radial arm holder 58 which presents minimum obstruction to the light passage through the optical system. Copper ring 57 has a downwardly projecting dog leg 65 (Figs. 9 and 10) which supports the radial arm electrode holder 58. Like in the previous embodiment, the holder has two stationary, projecting arms between which is a movable part 66. All three arms have a ring at the end through which electrode 27 is inserted and clamped in place. Turning electrode lock screw 67 moves center arm 66 radially.

The built-in optical system 68 has a simple lens 69 which images the weld region on the face of fiber optic bundle 19 by means of which the image can be conveniently transferred to a remote viewing system. The optical system looks at the weld region through the center of the ring-shaped torch body 57. The electrode holder 58 is sufficiently far removed from the focal plane of the optical system 68 so that it is not evident in the viewed image. A quartz window 70, which is transparent and heat reflecting, is located between the torch body 57 and the optical lens 69 and prevents gas flow in any direction except out through the gas cup 56. The lens 69 is fixed to a removable, metal, cylindrical lens housing 71 which is fastened to the top of torch body 57 by means of lock screws 75, and between them is the quartz window 70 and one or more optical filters 72. Lens 69 is, for example, a Hastings triplet with a 25 mm focal length and a 15 mm diameter. It has an aperture and focal length to just image a one inch (2.54 cm) diameter field of view on the full face of 0.2 inch (0.508 cm) fiber bundle with an approximately +0.25 inch (0.635 cm) depth of field.

The optical system 68 has a fixed lens but the fiber optic cable 19 is adjustable to focus the image of the weld puddle and weld area on the face of the cable. An insulating bundle housing 73 slides down over lens housing 71 and has an interior stop 74. The end of cable 19 is received in a cylindrical cavity in the top of the bundle housing.

The gas, coolant, and electrical power connections 60, 61, and 63 are outside of and concentric with the lens housing 71. The three copper tubes are inserted into holes in the top of ring 57 and held in place by soldering. An insulating plastic sleeve 76 covers the gas, coolant, and power connections and optical housing 71. The concentric configuration and novel structure of the torch shown in Figs. 7—10 makes for a compact lightweight device, not unlike a conventional welding torch, but having a built-in optical system which conventional torches do not have.

The third embodiment, a GTAW torch with a folded vision attachment, has a configuration which can be used for welding applications with resitricted access such as is frequently encountered in orbital arc welding of pipes in the nuclear power industry. When used in this and similar applications, the vision sensing capability of this torch system can be used to inspect weld quality or as a feedback element to control torch manipulation. The folded optical system, which minimizes system height over the weld region (say to four inches −10 cm), is provided to image the weld region on the face of the fiber optic cable. This torch is a modification of the embodiment in Figs. 1—6, and the same elements are identified by the same numerals. The optical path, after penetrating the quartz window 50, is folded 90° by a mirror 77 mounted on the inside of housing 24' above the tungsten electrode 27. The lens cell is the same as in Fig. 2 but at right angles to the electrode 27 and gas cup 25, and has a single lens and a pocket for accommodating optical filters. Lens housing 48 is adjustable axially in both directions and the end of the housing has a cylindrical cavity containing the fiber optic cable 19. Mounting bracket 53' is attached to top of an upper horizontal part of housintg 24'. The shape of torch body 57' is different to accommodate horizontal connection of the gas, water, and power tubes 31—33, but the integral slim profile electrode holder 30 is the same as previously described. The view of the weld area through the quartz window of the torch with folded integral vision system is as shown in Fig. 4. A typical torch has a height of 3.9 inches (9.9 cm) and a 5.35 inch (13.59 cm) horizontal dimension.

In conclusion, the electric arc welding torch with integral vision sensor has a unique configuration which makes it suitable for industrial welding. The active weld puddle and weld area are directly viewed by optical means. The center of the torch is cleared and presents minimum obstruction to passage of light and the electrode holder has a small cross section perpendicular to the optical axis and is out of focus in the image. The build-in vision sensor is needed in systems which control the movement of the torch and the welding process to achieve reliable machine welds. The invention has application to metal inert gas (MIG) and tungsten inert gas (TIG) welding.

## Claims

1. A concentric electric arc welding torch with a built-in optical vision sensor for real time observation of a weld puddle (18) and weld region comprising:
—a housing (24) to which is attached a gas nozzle (25);
—a metal torch body (29) in said housing having a cover gas connection (31) and internal passages (36; 37) for gas flow into said housing and nozzle, internal passages (34; 35) for coolant flow and incoming and exit coolant connections (32; 33), one of which (33) conducts electrical power to said torch body, and an integral electrode holder (30) in the form of a multipart projecting arm for holding an electrode (27) in said gas nozzle, said torch having an integral optical vision system (45) whose axis (49) is approximately aligned with said electrode and which is comprised of a lens housing (48) and a lens system (46; 47) mounted directly over said electrode and projecting arm, the cross section of said holder (30) perpendicular to the optical axis being relatively small and the region between said optical vision system and gas nozzle enclosed presenting minimum obstruction to passage of light; said lens system providing a demagnified image of the weld puddle (18) and weld region with said holder out of focus; and
means (19) on said torch for transferring said demagnified image to a remote welding controller (23).

2. The welding torch of claims characterized in that said image transferring means (19) is a coherent fiber optic cable, and said optical vision system (45) includes an optical filter (52) to transmit a small range of light.

3. The welding torch of claim 2 in combination with a video camera (22) whose output is fed to said welding controller (23).

4. The welding torch of claim 1 wherein said electrode holder (30) has a slim profile and two stationary arms (38; 39) which project from said torch body (29) and a movable center arm (40) that clamps said electrode (27) in said holder (30).

5. The welding torch of claim 1 wherein the torch is a gas tungsten arc welding torch; the gas nozzle (25) is in the form of a gas cup, the lens system (46; 47) is enclosed in the lens housing (48) directly over said electrode (27) and holder (30); the image transferring means (19) is a coherent fiber optical cable which is held in said lens housing (48) on the optical axis; and the optical vision system provides the demagnified image on the face of said fiber optic cable.

6. The welding torch of claim 5 wherein said lens housing (48) and lens system (46; 47) are adjustable relative to said first mentioned housing (24) to focus on the weld region

7. The welding torch of claim 5 wherein the gas cup (25) and the holder (30) are supported by the housing (24); the electrode (27) is of tungsten; the axis (49) of the integral optical vision system is approximately aligned with the tungsten electrode (27) and the center of the gas cup (25); the metal torch body (29) is at one side of the optical axis in said housing (24); the electrode holder (30) has a slim profile and is a chuck and has two stationary arms (38; 39) and a movable center arm (40) each with a cylindrical ring (41) into which said tungsten electrode (27) is inserted and clamped; said optical vision system (45) is sealed from the cover gas by a transparent window (70) directly above the said electrode (27) and holder (30).

8. The welding torch according to any of the preceding claims wherein the metal torch body (29) is ring-shaped.

## Patentansprüche

1. Konzentrischer elektrischer Lichtbogenschweißbrenner mit eingebautem Bildaufnehmer zur Echtzeitbeobachtung eines Schweißbades (18) und eines Schweißbereiches, umfassend:
ein Gehäuse (24), an dem eine Gasdüse (25) befestigt ist;
eine metallischen Brennerkörper (29) in dem Gehäuse mit einer Abdeckgas-Verbindung (31) und internen Durchgängen (36; 37) für die Gasströmung in Gehäuse und Düse, inneren Durch-gängen (34; 35) für die Kühlmittelströmung und einführende und ableitende Kühlmittelverbindungen (32; 33), von denen eine (33) elektrische Leistung dem Brennerkörper zuführt und
eine eingebauten Elektrodenhalter (30) in Form eines mehrteiligen vorspringenden Armes zum Halten einer Elektrode (27) in der Gasdüse,
wobei der Brenner ein eingebautes Bildsystem (45) aufweist, dessen Achse (49) etwa mit der Elektrode ausgerichtet ist und das aus einem Linsengehäuse (48) und einem Linsensystem (46; 47) zusammengesetzt ist, das direkt über der Elektrode und dem vorspringenden Arm montiert ist, wobei der Querschnitt des Halters (30) senkrecht zur optischen Achse relativ gering ist und der Bereich zwischen dem optischen Bildsystem und der eingeschlossenen Gasdüse ein minimales Hindernis für den Lichtdurchgang darstellt;
das Linsensystem ein verkleinertes Bild des Schweißbades (18) und des Schweißbereiches liefert, wobei sich der Halter außerhalb des Brennpunktes befindet und eine Einrichtung (19) auf dem Brenner zur Übertragung des verkleinerten Bildes zu einem entfernten Schweißregler (23).

2. Schweißbrenner nach Anspruch 1, dadurch gekennzeichnet, daß die Bildübertragungseinrichtung (19) ein kohärentes Faseroptikkabel ist und das optische Bildsystem (45) einen optischen Filter (52) zum Durchlassen eines schmalen Bereiches des Lichtes einschließt.

3. Schweißbrenner nach Anspruch 2, in Kombination mit einer Videokamera (22), deren Ausgang dem Schweißregler (23) zugeführt wird.

4. Schweißbrenner nach Anspruch 1, bei dem der Elektrodenhalter (30) ein schlankes Profil und zwei stationäre Arme (38; 39) aufweist, die von dem Brennerkörper (29) hervorstehen sowie einen bewegbaren zentralen Arm (40), der die Elektrode (27) im Halter (30) festklemmt.

5. Schweißbrenner nach Anspruch 1, wobei der Brenner ein Gas/Wolfram-Lichtbogenschweißbrenner ist, die Gasdüse (25) die Form eines Gasbechers hat, das Linsensystem (46; 47) im Linsengehäuse (48) direkt über Elektrode (27) und Halter (30) eingeschlossen ist; die Bildübertragungseinrichtung (19) ein kohärentes Faseroptikkabel ist, das auf der optischen Achse im Linsengehäuse (48) gehalten ist und das optische Bildsystem das verkleinerte Bild auf der Fläche des Faseroptikkabels liefert.

6. Schweißbrenner nach Anspruch 5, worin das Linsengehäuse (48) und das Linsensystem (46; 47) mit Bezug auf das zuerst genannten Gehäuse (24) einstellbar sind, um den Brennpunkt im Schweißbereich anzuordnen.

7. Schweißbrenner nach Anspruch 5, worin der Gasbecher (25) und der Halter (30) von dem Gehäuse (24) getragen sind; die Elektrode (27) aus Wolfram besteht; die Achse (49) des eingebauten optischen Bildsystems etwa mit der Wolframelektrode (27) und dem Zentrum des Gasbechers (25) ausgerichtet ist; der metallische Brennerkörper (29) sich auf der einen Seite der optischen Achse in dem Gehäuse (24) befindet; der Elektrodenhalter (30) ein schlankes Profil hat und eine Einspanvorrichtung ist mit zwei stationären Armen (38; 39) und einem bewegbaren zentralen Arm (40), jeweils mit einem zylindrischen Ring (41) in den die Wolframelektrode (27) eingeführt und geklemmt wird; wobei das optische Bildsystem (45) durch ein transparentes Fenster (70), das sich direkt über der Elektrode (27) und dem Halter (30) befindet, vor dem Abdeckgas abgedichtet ist.

8. Schweißbrenner nach irgendeinem der vorhergehenden Ansprüche, worin der metallische Brennerkörper (29) eine ringförmige Gestalt hat.

**Revendications**

1. Torche concentrique de soudure à arc électrique à viseur optique incorporé pour l'observation en temps réel d'un cordon de soudure (18) et d'une région de soudure, comprenant:

un boîtier (24) auquel est fixé une tuyère à gaz (25);

un corps de torche métallique (29) dans le boîtier comprenant une connexion de gaz de recouvrement (31) et des passages internes (36; 37) pour l'écoulement du gaz dans le boîtier et la tuyère, des passages internes (34; 35) pour écoulement de réfrigérant et des connexions de réfrigérant en entrée et en sortie (32; 33), dont l'une (33) conduit l'alimentation électrique vers le corps de torche, et un support d'électrode solidaire (30) sous forme d'un bras en saillie en plusieurs parties pour maintenir une électrode (27) dans la tuyère de gaz, cette torche comprenant un système de visée optique incorporé (45) dont l'axe (49) est sensiblement aligné avec l'électrode et qui est constitué d'un objectif (48) et d'un système d'objectif (46; 47) monté directement sur l'électrode et le bras en saillie, la section du support (30) perpendiculairement à l'axe optique étant relativement petite et la région comprise entre le système de visée optique et la tuyère à gaz présentant une obstruction minimale au passage de la lumière; ce système d'objectif fournissent une image réduite du cordon de soudure (18) et de la région de soudure, le support étant hors de la zone de mise au point; et

des moyens (19) sur la torche pour transférer l'image réduite vers un contrôleur de soudure à distance (23).

2. Torche de soudure selon la revendication 1, caractérisée en ce que les moyens de transfert d'image (19) sont constitués d'un câble à fibres optiques cohérentes et le système de visée optique (45) comprend un filtre optique (52) pour transmettre une petite plage de lumière.

3. Torche de soudure selon la revendication 2, en combinaison avec une caméra vidéo (22) sont la sortie est fournie audit contrôleur de soudure (23).

4. Torche de soudure selon la revendication 1, dans laquelle le support d'électrode (30) a un profil mince et comprend deux bras fixes (38; 39) qui font saillie à partie du corps de torche (29) et un bras central mobile (40) qui bloque l'électrode (27) dans le support (30).

5. Torche de soudure selon la revendication 1, dans laquelle la torche est une torche de soudure à l'arc au tungstène en présence de gaz; la tuyère à gaz (25) a la forme d'un embout à gaz; le système d'objectif (46; 47) est enfermé dans le boîtier de lentilles (48) directement au-dessus de l'électrode (27) et du support (30); les moyens de transfert d'image (19) sont un câble à fibres optiques cohérentes qui est maintenu dans le boîtier de l'objectif (48) sur l'axe optique; et le système de visée optique fournit l'image réduite sur la face avant du câble à fibres optiques.

6. Torche de soudure selon la revendication 5, dans laquelle le boîtier de l'objectif (48) et le système d'objectif (46; 47) sont réglables par rapport au premier boîtier mentionnée (24) pour effectuer une mise au point sur la région de soudure.

7. Torche de soudure selon la revendication 5, dans laquelle l'embout à gaz (25) et le support (30) sont soutenus par le boîtier (24); l'électrode (27) est un tungstène; l'axe (49) du système de visée optique incorporé est sensiblement aligné avec l'électrode en tungstène (27) et le centre de l'embout à gaz (25); le corps de torche métallique (29) est d'un côté de l'axe optique dans le boîtier (24); le support d'électrode (30) a un profil mince et est un mandrin qui comprend deux bras fixes (38; 39) et un bras mobile central (40) chacun étant muni d'une bague cylindrique (41) dans laquelle l'électrode de tungstène (27) est insérée et bloquée; le système de visée optique (45) est rendu étanche par rapport au gaz de recouvrement au moyen d'une fenêtre transparente (70) directement au-dessus de l'électrode (27) et du support (30).

8. Torche de soudure selon l'une quelconque des revendications précédentes, dans laquelle le corps de torche (29) métallique est en forme de bague.

EP 0 100 035 B1

Fig.1

Fig.5

Fig.6

1

WELD AREA

*Fig.4*

*Fig.2*

*Fig.3*

*Fig. 7*

*Fig. 8*

*Fig. 9*

*Fig. 10*

3

Fig. 11

Fig. 12